Europäisches Patentamt

European Patent Office

Office européen des brevets

(19)

(11) Publication number: **0 293 481**

**A1**

(12)

# EUROPEAN PATENT APPLICATION
published in accordance with Art. 158(3) EPC

(21) Application number: **87907519.0**

(22) Date of filing: **11.11.87**

Data of the international application taken as a basis:

(86) International application number:
**PCT/JP87/00871**

(87) International publication number:
**WO88/03680 (19.05.88 88/11)**

(51) Int. Cl.³: **G 06 F 3/13**
**G 06 F 15/60, B 43 L 13/00**
**B 41 J 5/30**

(30) Priority: **14.11.86 JP 271091/86**

(43) Date of publication of application:
**07.12.88 Bulletin 88/49**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **SEKI, Masaki**
**3-15-2-406, Takaido-nishi**
**Suginami-ku, Tokyo 168(JP)**

(72) Inventor: **TANAKA, Kunio**
**5-8-13, Tamagawa-cho**
**Akishima-shi, Tokyo 196(JP)**

(72) Inventor: **YOSHIZAKI, Masatoshi**
**1756-8, Honmachida**
**Machida-shi, Tokyo 194(JP)**

(72) Inventor: **ONISHI, Yasushi**
**Fanuc Hino-Shataku 406**
**3-27, Tamadaira Hino-shi, Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **METHOD OF TRANSFERRING DATA TO A PLOTTER.**

(57) Method of transferring graphic data prepared on the side of a host computer (40) to a plotter (80). Graphic data are prepared by the host computer (40) in drawings and are temporarily stored in an external memory unit (60). The graphic data are then transferred from the external memory unit (60) to the plotter (80) which then draws the drawing.

./...

## FIG. I

DESCRIPTION

METHOD OF TRANSFERRING DATA TO FIGURE OUTPUT UNIT

Technical Field

This invention relates to a method of transferring data to a figure output unit. More particularly, the invention relates to a figure data transfer method through which figure data are transferred from a host computer, which creates the figure data, to a figure output unit (a plotter or printer), which draws figures such as design drawings and ladder diagrams, thereby allowing the figure output unit to draw the figure.

Background Art

In a CAD/CAM system, an operator designs a manufactured product, mold or the like while conversing with a computer using a data input unit such as a keyboard or tablet device. At the completion of the designing operation, the operator causes the figure data to be stored in a memory or to be drawn out on a plotter to produce a hard copy of the figure.

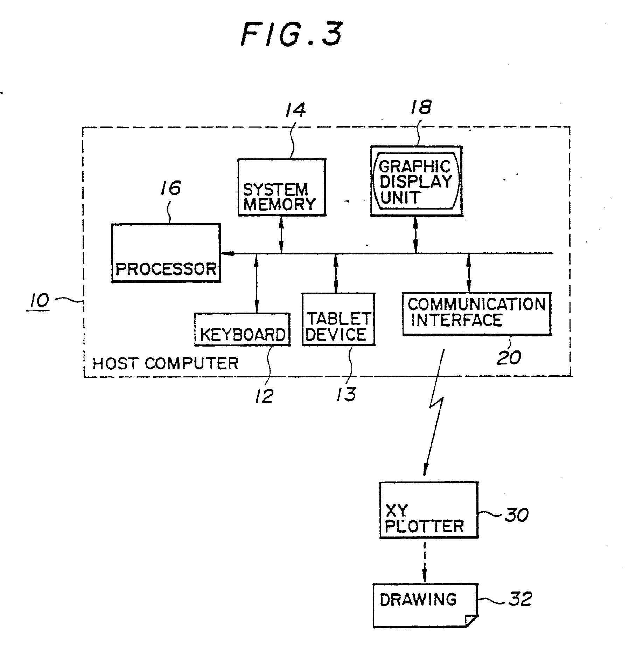

For example, in a host computer 10 for executing a mold designing operation, as shown in Fig. 3, data such as various commands and numerical values for mold design are inputted from a keyboard 12 or tablet device 13, whereupon a processor 16 executes prescribed mold design processing and causes a conversational display for mold design to appear on a graphic display unit 18 in accordance with a mold design program stored in a system memory (RAM) 14. The designing of a mold proceeds by repeating the input of data from the keyboard 12 or tablet device 13 in the conversational format and the processing executed by processor 16.

When the designing of the mold ends, the mold data that have been stored in the system memory 14 are stored in memory means (not shown) such as a floppy disc or hard disc. When a hard copy of the mold drawing (design drawing) is to be obtained, the processor 16 successively reads the mold figure data (design drawing data) out of the system memory 14, converts the data into figure commands (e.g. an ASCII code) for a plotter, transfers the data to an X-Y plotter 30 via an RS232C communication interface 20, and causes the data to be decoded on the side of the X-Y plotter 30 to output a drawing 32.

However, the X-Y plotter 30 draws the figure on a sheet of paper mechanically while moving a pen. When one figure command is received as an input from the host computer 10, the single drawing operation designated by this command is performed and then the plotter waits for the next input. When the next figure command input arrives, this next drawing operation is performed and then the next input is awaited. Thus, the host computer 10 outputs figure commands successively in response to the processing operation executed by the X-Y plotter 10. Since the drawing operation performed by the X-Y plotter 30 is slow, the host computer 10 is monopolized by the X-Y plotter 30 for an extended period of time during which the operator cannot use the host computer 10 for designing or other work.

Accordingly, an object of the present invention is to provide a method of transferring data.to a figure output unit through which the utilization efficiency of a computer can be raised by arranging it so that the host computer is not monopolized by a plotter, printer or the like during drawing.

Disclosure of the Invention

The present invention relates to a data transfer method through which figure data created on the side of a host computer is transferred to a figure output unit.

The method includes creating figure data by a host computer in figure units, temporarily storing the data in an external storage device, subsequently transferring the figure data from the external storage device to a figure output unit, and causing the figure output unit to draw a figure.

Brief Description of the Drawings

Fig. 1 is a block diagram illustrating a CAD/CAM system according to an embodiment of the present invention;

Fig. 2 is a flowchart of processing according to the invention; and

Fig. 3 is a block diagram of a CAD/CAM system according to the prior art.

Best Mode for Carrying Out the Invention

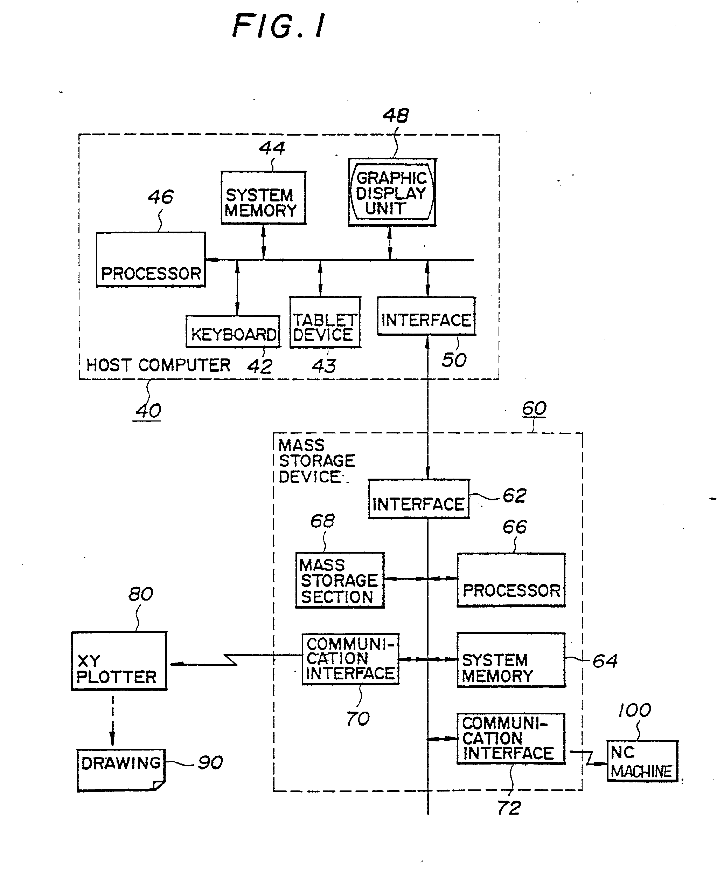

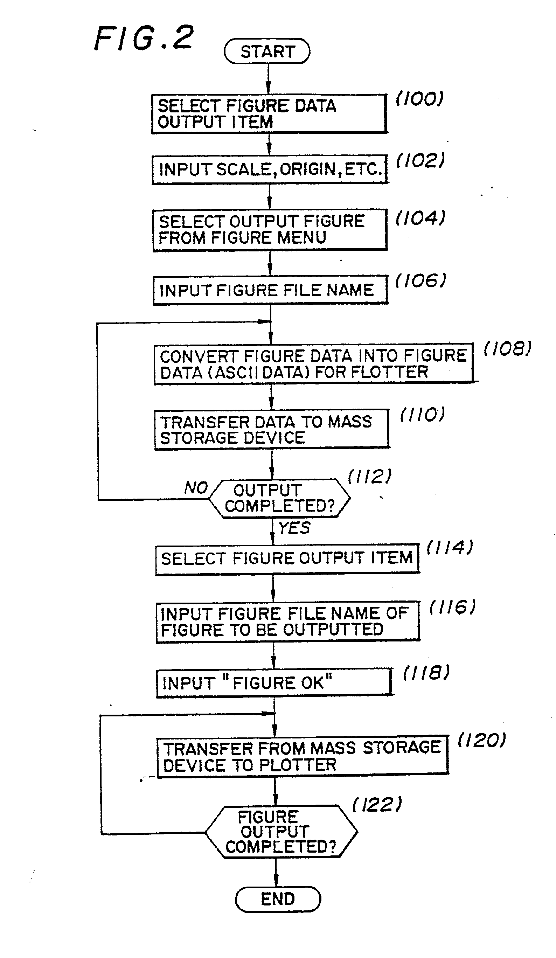

An embodiment of the invention will now be described on the basis of Figs. 1 and 2.

Fig. 1 is a block diagram of a CAD/CAM system according to the present invention. In Fig. 1, a host computer 40 which an operator uses to perform a mold designing operation in a conversational format includes a keyboard 42 and tablet device 43 for inputting various commands and data by key input and menu input, respectively, a system memory (RAM) 44 which stores programs necessary for various CAD/CAM processing as well as a figure data in the process of being created, a graphic display unit 48 for presenting conversational displays, an interface 50 for performing an exchange of data with an externally provided mass storage device 60, and a processor 46 which, in accordance with the programs stored in the system memory 44, executes data input processing from the keyboard 42 and tablet device 43, mold design processing, the display of conversational images on the graphic display unit 48, external output processing of figure data and the like from the interface 50, etc.

When there is an input of commands, numerical values and the like from the keyboard 42 or tablet device 43 for the purpose of design and drawing, the processor 46 executes predetermined processing to store the figure data in the system memory 44 and present the conversational display on the graphic display unit 48. When a command for outputting the plotter figure data (figure command) is received at the completion of the designing operation in the conversational format, the processor creates ASCII code figure data for the plotter from the figure data stored in the system memroy 44, and sends the data to the mass storage device 60 via the interface 50 to store the data in this storage device.

Connected to the mass storage device 60 by a bus are an interface 62 for performing an exchange of data with the host computer 40, a mass storage section 68, a system memory (RAM) 64 for storing a program which controls the writing and reading of data with respect to the mass storage section 68, a communication interface 70 based on RS232C for sending data to an X-Y plotter 80, a communication interface 72 based on RS232C for sending data to an NC machine tool 100, and a processor 66 which, in accordance with the program stored in the system memory 64, executes data input processing from the interface 62, data output processing from the communication interfaces 70, 72, and data write and read processing with respect to the mass storage section 68.

The processor 66 stores figure data inputted from the host computer 40 as well as NC program data inputted from an automatic programming apparatus in the mass storage section 68.  When a figure output command or NC data output command is received, the processor reads the figure data or NC data out of the mass storage section 68 and outputs the data from the communiction interface 70 or 72, respectively. The processor 66 executes output processing from the communication interfaces 70, 72 and data input processing from the interface 62 simultaneously in parallel fashion by means of multitask processing.

The X-Y plotter 80 incorporates an internal microcomputer and successively and repeatedly executes processing for receiving, decoding and drawing figure data from the mass storage section 60, thereby functioning to create a mold design drawing 90.

The operation of the foregoing embodiment will now be described with reference to the flowchart of Fig. 2.

At the completion of the mold designing operation, an item reading "FIGURE DATA INPUT" on a menu chart affixed to the tablet surface of the tablet device 43 is picked by means of a tablet cursor (step 100). Scale, origin and the like for figure output are inputted next (step 102).

Thereafter, a figure to be outputted (a drawing of a manufacture product, a blank layout drawing, a strip layout drawing, a plate plan view, a sectional view, etc.) is designated from "FIGURE MENU" on the menu chart (step 104), and a file name (figure file name) of the figure data registered in the mass storage section 68 is inputted (step 106).

When the figure file name has been inputted, the processor 46 converts the figure data, which have been stored in the system memory (RAM) 44, into ASCII-code X-Y plotter figure data one item at a time (step 108), transfers the plotter figure data to the mass storage device 60 via the interface 50, and registers the data in the mass storage section 68 (step 110).

Next, it is checked to determine whether all of the figure data have been converted into the ASCII-code figure data and transferred to the mass storage device 60 (step 112). If the transfer has not been made, processing from step 108 onward is repeated.

If all of the data have been transferred and the registration of the data in the mass storage section 68 has been completed, the next instruction is awaited. If the operator now picks the item "FIGURE OUTPUT" on the menu chart (step 114) and inputs the figure file name of the figure to be outputted (step 116), then a promt reading "FIGURE OUTPUT OK" or "NO FIGURE OUTPUT" will be displayed on the display screen. Accordingly, "OK" is inputted (step 118).

In response, the processor 66 of the mass storage device 60 successively provides the X-Y plotter 80, via the communication interface 70, with the figure data of the specified figure file name stored in the mass storage section 68, thereby causing the plotter to draw the figure. When one item of figure data is outputted, the X-Y plotter 80 performs one drawing operation based on this figure data. When the operation ends, the processor requests the next item of figure data. Thus, the outputting of the figure data from the mass storage device 60 and the drawing operation performed by the X-Y plotter 80 are executed in turn. These operations are continued in similar fashion to draw out the mold design drawing to eventually obtain the mold design drawing 90 as a hard copy.

Though the drawing of one figure by the X-Y plotter 80 can require more than tens of minutes when the figure is a complicated one, the host computer 40 is freed from performing the drawing processing during this time and therefore can be fully applied to processing for designing another mold or the like. It should be noted that if an NC program created by an automatic programming apparatus, not shown, is stored in the mass storge unit 68 separately of the figure data, then the NC data can be successively outputted from the communication interface 72 to the NC machine tool 100 at the same time (by multitask processing) to perform automatic machining even while drawing executed by the X-Y plotter 80 is in progress.

Though a case has been described in which the present invention is applied to the creation of a mold design drawing by a plotter, the invention is not limited to such an arrangement. For example, the invention can be applied to a case where a ladder diagram is drawn by a printer based on ladder diagram figure data created by a host apparatus, and to a general case where drawing is performed by a figure output unit based on figure data created by a host apparatus.

Thus, in accordance with the method of transferring figure data to a figure output unit according to the present invention as described above, the arrangement is such that the figure data are created and temporarily stored in an external storage device, the host computer is cut off from the external storage device and an exchange of the figure data is performed between the external storage device and the figure output unit. Therefore, since the host computer is freed from executing drawing processing during drawing performed by the figure output unit, the host computer is capable of executing other processing. This makes it possible to raise the utilization efficiency of the host computer.

CLAIMS:

1.   A data transfer method for creating drawing data
for a figure output unit on the side of a host computer
and transferring the figure data to the figure output
unit, characterized by:

creating figure data for the figure output unit by
a host computer in figure units and temporarily storing
the data in an external storage device;

subsequently transferring the figure data from
said external storage device to the figure output unit;
and

causing the figure output unit to draw a figure
based on said figure data.

2.   A method of transferring data to a figure output
unit according to claim 1, characterized in that said
figure output unit is a plotter or printer.

3.   A method of transferring data to a figure output
unit according to claim 1, characterized in that said
mass external storage device is constituted by a
computer and includes a processor, a program memory, a
mass storage section, an interface for performing an
exchange of data with the host computer, and an
interface for performing an exchange of data with the
figure output unit, these being interconnected by a
bus.

4.   A method of transferring data to a figure output
unit according to claim 3, characterized in that when a
figure data output request is inputted from a data input unit provided on the host computer side and a scale, figure origin and figure name for the figure to be outputted, which are necessary for figure output, are inputted, the host computer converts the figure data of the inputted figure into figure data for the figure output unit and transfers said figure data to the mass storage device, and the processor of the mass storage device stores said figure data in the mass storage section.

5. A method of transferring data to a figure output unit according to claim 4, characterized in that when the figure output request is inputted from the data input unit together with the figure name of the figure to be outputted, the mass storage device transfers one item of figure data of said figure name to the figure output unit, the figure output unit draws the figure using said figure data and requests the mass storage device for the next item of figure data at the end of the drawing operation, and the mass storage device responds to the request for figure data by transferring the next item of figure data to the figure output unit and thereafter repeats a similar operation.

# FIG. 1

# FIG.2

```
( START )
        │
        ▼
┌──────────────────────┐
│ SELECT FIGURE DATA   │  (100)
│ OUTPUT ITEM          │
└──────────────────────┘
        │
        ▼
┌──────────────────────┐
│ INPUT SCALE,ORIGIN,ETC.│  (102)
└──────────────────────┘
        │
        ▼
┌──────────────────────┐
│ SELECT OUTPUT FIGURE │  (104)
│ FROM FIGURE MENU     │
└──────────────────────┘
        │
        ▼
┌──────────────────────┐
│ INPUT FIGURE FILE NAME│  (106)
└──────────────────────┘
        │
        ▼
┌─────────────────────────────────┐
│ CONVERT FIGURE DATA INTO FIGURE  │  (108)
│ DATA (ASCII DATA) FOR FLOTTER    │
└─────────────────────────────────┘
        │
        ▼
┌──────────────────────┐
│ TRANSFER DATA TO MASS │  (110)
│ STORAGE DEVICE        │
└──────────────────────┘
        │
        ▼
     NO  ╱ OUTPUT ╲  (112)
   ◄─────  COMPLETED?
         ╲        ╱
            │ YES
            ▼
┌──────────────────────┐
│ SELECT FIGURE OUTPUT ITEM │  (114)
└──────────────────────┘
        │
        ▼
┌──────────────────────────┐
│ INPUT FIGURE FILE NAME OF │  (116)
│ FIGURE TO BE OUTPUTTED    │
└──────────────────────────┘
        │
        ▼
┌──────────────────────┐
│ INPUT "FIGURE OK"    │  (118)
└──────────────────────┘
        │
        ▼
┌──────────────────────────┐
│ TRANSFER FROM MASS STORAGE │  (120)
│ DEVICE TO PLOTTER         │
└──────────────────────────┘
        │
        ▼
       ╱ FIGURE ╲  (122)
   ◄──  OUTPUT
      ╲ COMPLETED? ╱
            │
            ▼
         ( END )
```

# FIG.3

# INTERNATIONAL SEARCH REPORT

0293481

International Application No  PCT/JP87/00871

## I. CLASSIFICATION OF SUBJECT MATTER (if several classification symbols apply, indicate all) 3

According to International Patent Classification (IPC) or to both National Classification and IPC

Int.Cl⁴    G06F3/13, 15/60, B43L13/00, B41J5/30

## II. FIELDS SEARCHED

| Minimum Documentation Searched 4 | |
|---|---|
| Classification System | Classification Symbols |
| IPC | G06F3/13, 15/60<br>B43L13/00, B41J5/30 |

| Documentation Searched other than Minimum Documentation<br>to the Extent that such Documents are Included in the Fields Searched 5 | |
|---|---|
| Jitsuyo Shinan Koho | 1972 - 1986 |
| Kokai Jitsuyo Shinan Koho | 1972 - 1985 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 53-16541 (Hitachi, Ltd.)<br>15 February 1978 (15. 02. 78)<br>(Family: none) | 1-5 |
| X | JP, A, 54-48124 (Hitachi, Ltd.)<br>16 April 1979 (16. 04. 79)<br>(Family: none) | 1-5 |
| X | JP, A, 58-58643 (Fujitsu Ltd.)<br>7 April 1983 (07. 04. 83)<br>(Family: none) | 1-5 |
| X | JP, A, 60-59430 (Komori Printing Machinery<br>Co., Ltd.)<br>5 April 1985 (05. 04. 85)<br>(Family: none) | 1-5 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| December 1, 1987 (01.12.87) | December 14, 1987 (14.12.87) |
| International Searching Authority 1 | Signature of Authorized Officer 20 |
| Japanese Patent Office | |